(19) Europäisches Patentamt
European Patent Office
Office européen des brevets

(11) **EP 1 436 768 B1**

(12) **EUROPEAN PATENT SPECIFICATION**

(45) Date of publication and mention
of the grant of the patent:
**26.08.2009 Bulletin 2009/35**

(51) Int Cl.:
***G06K 7/10*** *(2006.01)*      ***G03B 7/093*** *(2006.01)*

(21) Application number: **02800297.0**

(22) Date of filing: **03.10.2002**

(86) International application number:
**PCT/SE2002/001794**

(87) International publication number:
**WO 2003/030082 (10.04.2003 Gazette 2003/15)**

(54) **AN OPTICAL SENSOR DEVICE AND A METHOD OF CONTROLLING ITS EXPOSURE TIME**

OPTISCHE SENSOREINRICHTUNG UND VERFAHREN ZUR STEUERUNG IHRER BELICHTUNGSZEIT

DISPOSITIF A CAPTEUR OPTIQUE ET PROCEDE POUR COMMANDER SON TEMPS D'EXPOSITION

(84) Designated Contracting States:
**AT BE BG CH CY CZ DE DK EE ES FI FR GB GR IE IT LI LU MC NL PT SE SK TR**

(30) Priority: **03.10.2001 SE 0103286**

(43) Date of publication of application:
**14.07.2004 Bulletin 2004/29**

(73) Proprietor: **Anoto AB**
**223 69 Lund (SE)**

(72) Inventor: **OLSSON, Andreas**
**S-222 29 Lund (SE)**

(74) Representative: **Perklev, Karin Cecilia et al**
**Anoto AB**
**Emdalavägen 18**
**223 69 Lund (SE)**

(56) References cited:
**EP-A2- 0 602 637          WO-A1-97/05560**
**US-A- 5 223 935          US-A- 5 831 254**
**US-B1- 6 270 013**

• **TIM WESCOTT: 'PiD without a PhD: a simple software controller design method' EMBEDDED SYSTEMS PROGRAMMING 01 January 2000, MILLER FREEMAN, SAN FRANCISCO, CA, US, pages 86 - 108, XP009096985**

**Description**

**Field of the Invention**

Generally speaking, the present invention relates to the fields of digital communication, digital image processing and image-capturing hand-held devices. More specifically, the present invention concerns an optical sensor device having an illuminating light source and an image sensor, wherein the image sensor is adapted to capture a sequence of images under exposure of light from the light source. The invention also concerns a method of controlling the exposure time of such an optical sensor device.

**Background of the Invention**

Image-capturing hand-held devices of the above type are widely used. For instance, a digital pen is shown in Applicant's published international application WO 01/16691. As described in WO 01/16691, the digital pen may be used together with a product which has a writing surface and a position code provided thereon. The position code encodes a plurality of positions on the surface and may be detected by the digital pen. Thus, information which is being written on the writing surface by means of the digital pen can be electronically recorded by the pen.

In a position-coding product of the above or other types, the code is often represented by a graphical pattern of geometrical objects, marks or symbols, such as empty or filled circles (dots), squares, triangles, etc. The symbols may have uniform or varying appearance (size, color, etc), depending on the actual position coding principle involved. The surface of the product is provided with its position-coding pattern in a suitable way, such as by offset printing, laser printing, inkjet printing or thermal printing.

The digital pen operates by capturing a sequence of images, at a predetermined rate, of the surface of the product as the pen moves across it. In order to decode the position-coding pattern of objects in each captured image, the objects must be safely identified and not be confused with the background of the image. Separating the objects in an image from its background is sometimes referred to as segmentation or binarization. Successful segmentation is facilitated by optimal image quality and, in particular, optimal contrast, i.e. difference in color or greyscale luminance (intensity) between objects and background in the image.

However, image-capturing hand-held devices like the digital pen above are exposed to varying illumination environments due to the very nature of their intended use. For instance, as described in US-5,764,611, a hand-held image-capturing device is typically not held perpendicularly to the surface to be scanned but rather at a varying angle of inclination with respect to the surface. To accurately reproduce the information contained in an image which is captured at an arbitrary inclination, US-5,764,611 proposes use of an inclination sensor in combination with a luminance level detection circuit and a luminance variation calculation circuit. In more detail, the luminance level detection circuit detects average luminance data for each of a predetermined number of subareas of an image captured by an image sensor. Each sub-area is low-pass filtered so as to remove effects caused by the objects (black dots) in the image. Thus, the filtered image subareas predominantly contain background data. Average luminance level data are obtained stepwise for the subareas and are accumulated into an average luminance level for the entire image. This average luminance level is used for automatic gain control (AGC) of an image pickup process circuit, which is coupled to the image sensor.

The solution according to US-5,764,611 has a drawback in that it requires complex circuitry in order to perform automatic gain control for the image pickup process circuit. In particular, such automatic gain control will amplify not only the desired portions of the image (i.e., the image signal from the image sensor) but also any noise included therein. Therefore, since noise is inevitable in reality, it is difficult to obtain optimum image contrast by amplifying the image signal.

In addition, many other factors than the inclination angle of the device with respect to the recording surface will contribute to a varying illumination environment for hand-held image-capturing devices. For instance, infrared light emitting diodes (IR LEDs), which are commonly used as illuminating light sources in hand-held image-capturing devices, have a specific irradiance (illumination power), which varies widely between individual diodes. Moreover, light emitting diodes are typically expected to decrease their output power with as much as 50 % during their operational lifetime.

Furthermore, external sources of illumination, such as sunlight, may affect the illumination environment. Also, the light scattering or reflecting properties are different for different recording surface materials and may also vary between different parts of the recording surface (e.g. between a paper background and the dots printed thereon).

Consequently, the illumination environment depends on many different parameters, which are difficult to compensate fully and dynamically for by adjusting the image sensor itself or the image processing circuitry, which is coupled to the image sensor. In any event, such compensation would require complex circuitry, which is expensive in terms of processing power as well as component costs.

Generally speaking, digital pens are consumer products and should therefore be manufactured at low cost. Manufacturing cost is increased by either the usage of high-precision data capture components, or the need to trim every manufactured pen to accommodate for variations in its illumination system and/or image detection system, as caused by manufacture or assembly. In a consumer product, it is also undesirable to have the user periodically recalibrate the pen to accommodate for temporal changes of the illumination system. Also, it is objectionable to put severe constraints on the digital pen usage, for example in terms of allowable writing angles, allowable surface materials, and allowable writing environments. This is contrasted by the fact that the digital pen may not be used for writing under such conditions that more than an occasional image in the sequence of images is undecodable, since any resulting errors in the decoding adversely affects the quality of the electronic version of the handwritten information.

The foregoing problem discussion is at least partly applicable to other types of image-capturing devices, which operate under varying illumination conditions and interpret, identify, decode or otherwise read information contained in captured images.

The prior art comprises such devices with exposure control. WO 97/05560 discloses a so-called dataform reader which uses a prestored look-up table to determine a subsequent exposure time, based on a current sensor gain value and a property of a current image. Such a look-up table limits the use of the reader to well-defined, pre-calibrated conditions. US-5 223 935 discloses an electronic still camera with automatic exposure control in which prestored conversion tables are used to set the exposure time. EP-0 602 637 and US-5 831 254 disclose bar code readers which adjust an exposure time control signal to a light source and an image sensor, respectively, by a predetermined amount until a property of the resulting images is found to be acceptable. Whenever used outside a specific operation condition, such bar code readers are likely to exhibit a lengthy adjustment phase or instabilities, leading to a potential loss of information in a considerable number of captured images.

## Summary of the Invention

In view of the above, an objective of the invention is to provide a solution to the problems discussed above and to provide an efficient way of obtaining optimal image quality for an optical sensor device having an illuminating light source and an image sensor.

In particular, an objective is to provide optimum, or at least adequate, image contrast between background and objects in images which are produced by a hand-held image-capturing device in a potentially varying or uncertain illumination environment, so as to maximize the ability to interpret, identify, decode or otherwise read information that is represented by the objects in the captured images.

Generally, the above objectives are wholly or at least partly achieved by a method and a device according to the attached independent patent claims. Preferred embodiments of invention are set forth in the attached dependent claims.

A first aspect of the invention is a method for exposure time control in an optical sensor device of the type having an illuminating light source and an image sensor for capturing a sequence of images under exposure of light from the light source. The method involves repeatedly capturing images as the optical sensor device is moved and, for each next image to be captured, controlling quality of the next image, said controlling comprising forming an exposure time control loop, wherein each iteration of the control loop involves: capturing a current image under exposure of light from the light source during an exposure time calculated during the preceding iteration; determining an actual luminance condition value in the current image; calculating an error between a set value and the actual luminance condition value; and calculating a current exposure time as a function of the preceding exposure time and the error.

A second aspect of the invention is a computer program product directly loadable into a memory of a processor, where the computer program product comprises program code for performing the method according to the first aspect when executed by the processor.

A third aspect of the invention is an integrated circuit, which is adapted to perform the method according to the first aspect.

A fourth aspect of the invention is a hand-held image-producing apparatus comprising either the computer program product according to the second aspect or the integrated circuit according to the third aspect.

A fifth aspect of the invention is an optical sensor device comprising an illuminating light source and an image sensor. The image sensor is adapted to capture a sequence of images under exposure of light from the light source and is adapted to repeatedly capture images as the optical sensor device is moved. The optical sensor device further comprises a controller having a control output and being adapted to generate an exposure time control signal on the control output. The controller comprises an exposure time control loop in order to control quality of each next image to be captured, wherein each iteration of the control loop involves: calculating an error between a set value and an actual luminance condition value determined in a current image in said sequence of images; calculating a current exposure time as a function of the error and an exposure time calculated during the preceding iteration of the control loop; and generating the exposure time control signal on the control output based on the current exposure time.

## Brief Description of the Drawings

A preferred embodiment of the present invention will now be described in more detail, reference being made to the enclosed drawings, in which:

FIG 1 is a schematic view of a hand-held sensor device according to the preferred embodiment,
FIG 2 schematically illustrates a set of 4 x 4 objects in a position-coding pattern, which can be detected by the sensor device of FIG 1,
FIG 3 is a block diagram, which illustrates central parts, within the context of the present invention, of the sensor device shown in FIG 1,
FIG 4 is a flowchart diagram to illustrate the general steps of a method according to the preferred embodiment,
FIG 5 is a flowchart diagram to illustrate the method of FIG 4 in more detail,
FIGs 6-8 illustrate optical system responsivity functions for three illuminating light sources under different illumination conditions,
FIG 9 is a schematic diagram which demonstrates the mean background luminance and the mean object luminance, respectively, as well as the contrast between them, as a function of exposure time, and
FIGs 10-12 illustrate linear approximations around a particular background luminance set value for the three sets of graphs in FIGs 6-8.
FIGs 13-14 illustrate the dynamic behavior of the control loop for the sensor devices represented in FIGs 10 and 12, respectively, wherein the top graph illustrates the mean background luminance in a sequence of images, and the bottom graph illustrates the corresponding exposure time as determined by the control loop.

## Detailed Disclosure of Embodiments

A. General Overview of Preferred Embodiment

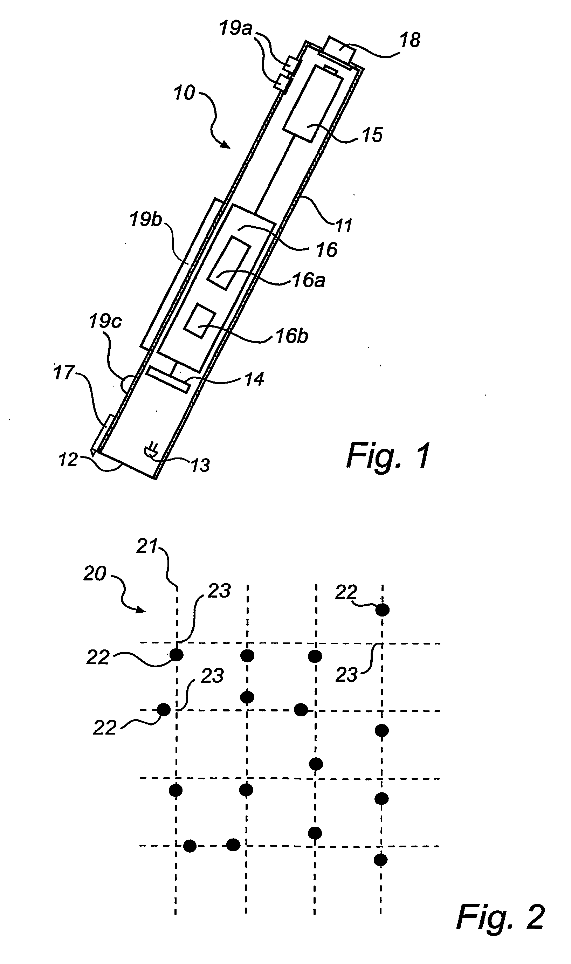

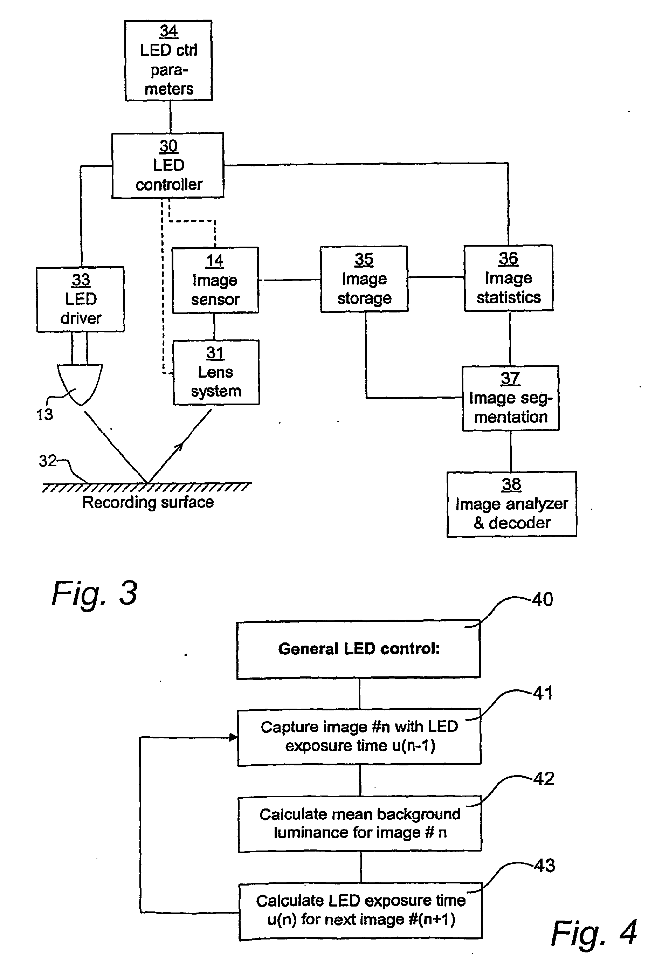

A preferred embodiment will now be described with reference to the hand-held sensor device 10 of FIGs 1 and 3, which is used as a digital pen in combination with a position-coding pattern 20 of FIG 2. However, it is to be emphasized, again, that the invention is in no way limited to such a sensor device or position-coding pattern. On the contrary, these are used for exemplifying purposes only.

The position-coding pattern 20 is described in detail in WO 01/16691, WO 01/26032 and WO 01/26033.

Also the sensor device 10, with the exceptions given below, is described in detail in aforesaid WO 01/16691, WO 01/26032 and WO 01/26033. A brief description of first the general components of the sensor device 10 and then the position-coding pattern 20 will follow below.

The sensor device 10 has a casing 11 having approximately the same shape as a conventional highlighter pen. One short side of the casing has a window 12, through which images recorded.

Principally, the casing 11 contains an optics part, an electronics part and a power supply.

The optics part comprises at least one illuminating light source 13, a lens system 31 (shown in FIG 3), and an optical image sensor 14. The light source 13, which will be described in more detail later, is intended to illuminate a surface 32 (shown in FIG 3) of a product, which lies within the range of vision of the window 12. The surface 32 contains the position-coding pattern 20. Through the lens system, an image of the surface 32 will be projected onto the image sensor 14.

In the preferred embodiment, the power supply of the sensor device 10 is a battery 15, but it can alternatively be a mains connection (not shown).

The electronics part 16 comprises a main processing device 16a together with associated storage means 16b. The main processing device 16a is responsible for the various functionality of the sensor device 10 and may preferably be implemented by a commercially available microprocessor such as a CPU ("Central Processing Unit"), a DSP ("Digital Signal Processor") or another programmable logic device such as an FPGA, or alternatively as an ASIC ("Application-Specific Integrated Circuit"), as discrete analog and digital components, or in any combination thereof.

The storage means 16b preferably includes various types of memory, such as a work memory (RAM) and a read-only memory (ROM). Associated programs are stored in the storage means 16b and will perform the functionality of the sensor device 10 when executed by the main processing device 16a.

A conventional pen point 17 is provided on the casing 11. By means of the pen point 17, the user may write or sketch physically on the product surface 32 through deposition of an ordinary pigment-based marking fluid onto the surface. Preferably, the marking fluid of the pen point 17 is transparent to infrared light so as to avoid interference with the optoelectronic detection of the sensor device 10, which, as will be explained below, is carried out by means of infrared light.

The electronics part further comprises a transceiver 18 for transmitting information to/from an external apparatus, such as a computer, a PDA or a mobile telephone. The transceiver 18 is preferably adapted for short-range radio communication in accordance with, e.g., the Bluetooth standard in the 2.4 GHz ISM band ("Industrial, Scientific and Medical"). The transceiver can, however, alternatively be adapted for infrared communication (such as IrDA - "Infrared Data Association"), or wire-based serial communication (such as RS232), or essentially any other available standard for short-range communication between a hand-held device and an external apparatus.

Additionally, the electronics part may comprise buttons 19a, by means of which the user can control the operation of the sensor device 10. The sensor device 10 may also comprise a display 19b, such as a liquid crystal display (LCD), and a status indication lamp 19c.

With reference to FIG 2, the position-coding pattern 20 comprises a virtual raster 21, around which a plurality of marks 22 are formed. Each mark represents one of four possible values, "1" to "4". The value of each mark is represented by its actual position 22 in relation to its nominal position 23, where the latter is at the intersection between a respective horizontal and vertical line of the raster 21. Thus, each mark 22 can be located in one of four different positions that are displaced in orthogonal directions from the nominal position 23. The displacement is advantageously not less than about 1/8 and not more than about 1/4, preferably about 1/6, of the distance between adjacent raster lines.

The distance between adjacent raster lines may for instance be about 300 $\mu$m or 254 $\mu$m. The latter distance is particularly suitable for printers and scanners, which often have a resolution of a multiple of 100 dpi (dots per inch).

Each mark 22 is constituted by a substantially circular dot having a radius, which advantageously is about 25% to 120% of the displacement of the dot from the nominal position 23. Alternatively, the marks 22 can have other geometrical shapes than circular, such as rectangular, triangular, elliptical, and may moreover be filled or outlined.

The position-coding pattern 20 can be designed to encode a very large number of absolute positions. For instance, 6x6 adjacent marks may jointly encode a position having x and y coordinates. By providing a surface of a product with a position-coding pattern 20, an electronic representation of information that is being written or sketched on the product surface can be obtained by means of a sensor device 10 by repeatedly capturing images of the surface as the sensor device 10 is moved across the surface. In these images, the marks 22 will appear as foreground objects, whereas the raster 21 is only virtual and will not appear in the images. Therefore, the background of the images will essentially represent the areas of the product surface where no marks 22 are present.

Reference is now made to FIG 3, which contains a more detailed illustration of some portions of the electronics part 16 of the sensor device 10. At least some of the components in FIG 3 may be realized by the main processing device 16a together with associated software in the storage means 16b. Alternatively, separate integrated circuits, discrete analog and/or digital components, or any combination thereof, may be used, as is readily understood by a man skilled in the art.

In the embodiment of FIG 3, the illuminating light source 13 is an infrared light emitting diode, IR LED, which is driven by a LED driver 33. Therefore, the marks 22 of the position-coding pattern 20 are preferably printed with a dye that absorbs infrared light. IR LEDs are commercially available in numerous varieties, one example being the IR LED called HIR 204 from Everlight Electronics Co, Ltd, No. 25, Lane 76, Sec. 3, Chung Yang Rd., Tucheng 236, Taipei, Taiwan. HIR 204 comprises a GaAlAs chip and has a peak wavelength $\lambda_p$=850 nm.

The LED driver 33 provides supply voltage to the IR LED 13 during a certain exposure time, so that the IR LED 13 will illuminate the product surface 32, and the position-coding pattern 20 provided thereon, with infrared light, which is reflected from the surface 32 and is captured by the image sensor 14 through the lens system 31.

The image sensor 14 is an area sensor, such as a CMOS sensor or a CCD sensor, which is commercially available from e.g. Motorola or National Semiconductor, both of the USA. The image sensor 14 of the preferred embodiment is capable of producing 8-bit grayscale images in 96x96 pixel resolution at a rate of 100 images per second.

Images captured by the image sensor 14 are stored in an image storage 35, which comprises an electronic memory of suitable and commercially available type, such as a DRAM memory. Optionally, the image sensor 14 and the image storage 35 may be combined into one integrated circuit.

An image statistics module 36 acts as an interface to the image sensor 14/image storage 35 and also to a LED controller 30, as will be described later. A purpose of the image statistics module 36 is to provide statistics data for the captured image(s), to be used when preprocessing the image in an image segmentation module 37. Such statistics data may represent the statistic distribution of all possible image luminance (8-bit grayscale intensity) values for the pixels in the captured image.

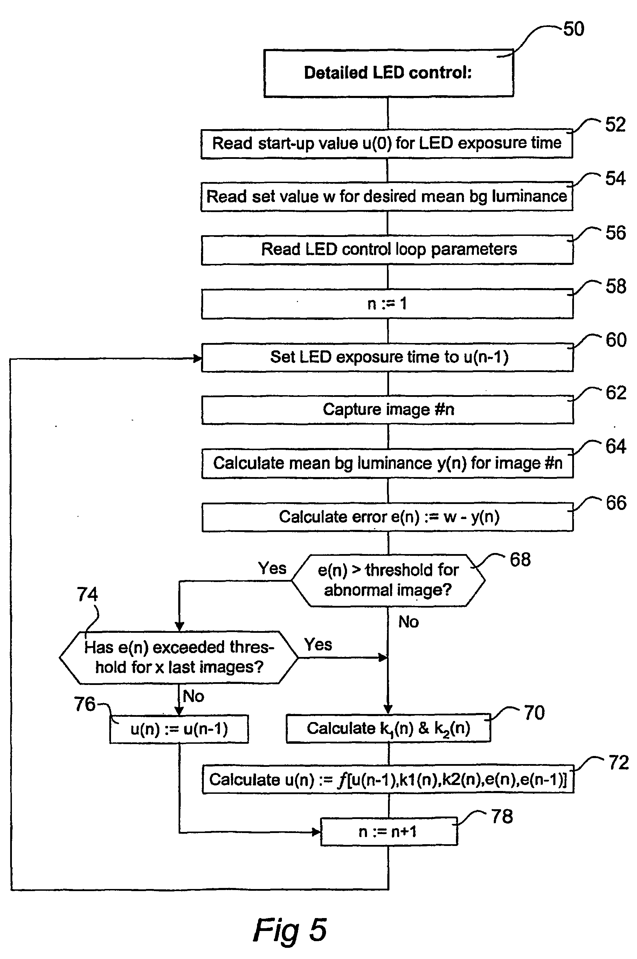

In the preferred embodiment, though, the image statistics module 36 divides the captured image into a number of subimages with a size which is chosen in view of the position-coding pattern 20, so that each subimage will predominantly contain background and, thus, only to a minor extent marks 22. The maximum luminance value in each subimage will represent the local background. The mean background luminance is then calculated as the mean of the subimages in the central part of the image, so as to avoid the effects of varying illumination over the image. For example, dark borders could result in a low mean background value, even if the central part is saturated. The calculated mean background luminance will then be used by aforesaid LED controller 30 when performing exposure time control, as will be described later with particular reference to FIG 5.

Correspondingly, the image statistics module 36 calculates local minimum luminance values for the subimages, to be used as local representations of the local image objects (marks 22) in an image segmentation module 37.

The statistics module is described in further detail in Applicant's international patent application PCT/SE02/01244. It is to be understood that the division of the captured image into subimages need not be a physical division. Normally, the subimages are imaginary and used only in extracting data from the image. Likewise, it should be clear that the mean background luminance in an image can be estimated in other ways. In one variant, the local background in each subimage is represented by a percentile value, e.g. in the range of about 80-95, of the luminance values within the subimage. In a further variant, the mean background luminance is calculated as the average of the luminance values in the image, or a subset thereof, optionally after having minimized the influence of any objects therein, e.g. by suitable filtering.

The image segmentation module 37 will perform segmentation or binarization of the captured image, i.e. separate the foreground image objects (corresponding to the marks 22 in the position-coding pattern 20) from the image background. Advantageously, such segmentation or binarization is performed by a threshold process, where the luminance values for individual image pixels are compared to a threshold value. In short, luminance values in excess of the threshold value is set to 1, otherwise to 0, or vice versa. Threshold processing can either be performed globally, where one threshold value is commonly applied to the entire image, or preferably locally, where the image is divided into subareas, which are given different threshold values. Threshold processing is well known in the art and forms no central part of the present invention. Examples are found in US-5,764,611, which was referred to in the introductory section of this document, and in above-mentioned PCT/SE02/01244.

After segmentation of the captured image, an image analyzer & decoder 38 performs the actual processing of the image of the position-coding pattern 20. The image analyzer & decoder 38 outputs absolute positions which have been decoded from the image. The decoding of the position-coding pattern into absolute positions is described in detail in aforesaid WO 01/16691, WO 01/26032 and WO 01/26033.

According to the invention, as already mentioned, the exposure time is controlled in view of the quality of an already captured image so as to improve the quality of the next image to be captured. In the preferred embodiment, this control is exercised by the LED controller 30. To this end, the LED controller 30 is coupled to the image statistics module 36, as seen in FIG 3. The LED controller 30 is also coupled to an LED control parameter storage 34 for storing parameters, which are required by the LED controller 30. An output of the LED controller 30 is connected to an input of the LED driver 33. The LED controller 30 is adapted to calculate a new exposure time $u(n)$ and to feed the new exposure time as a control signal to the LED driver 33, which will drive the IR LED 13 during the lapse of this new exposure time when capturing the next image. Thus, "exposure time" in the preferred embodiment refers to the time period during which the LED driver 33 causes the IR LED 13 to emit infrared light during the capture of an individual image. The above will be described in more detail in the next section.

The LED controller 30 may be implemented as a processor (such as a CPU or DSP), or another programmable logic device such as an FPGA, together with program code stored in an associated memory. The LED controller 30 may alternatively be realized as an integrated circuit, as discrete logic gates together with other analog and digital components, or in any combination of the above.

B Exposure time control in preferred embodiment

The operation and functionality of the exposure time control according to the preferred embodiment will now be described in detail with reference to the remaining figures. First, the typical illumination situation for a hand-held sensor device like the sensor device 10 will be discussed based upon an optical system responsivity function. Then, an exposure time control loop for an illuminating light source like the IR LED 13 will be presented.

I. OPTICAL SYSTEM RESPONSIVITY FUNCTION

The relationship between the exposure time (with constant supply current to the IR LED 13) and the luminance value in a captured image is referred to as an *optical system responsivity function.* This function describes the mean background luminance as a function of exposure time. The following parameters are relevant:

- The IR LED 13 has a specific irradiance. Irradiance is expressed in [W/m2] and represents the illumination power incident on the surface 32 of the product. This power varies widely with the specific example of the IR LED as well as the angle of the sensor device 10 with respect to the surface.
- Depending on for example sunlight or other external illumination on the surface 32, additional illumination power may reach the image sensor 14.
- The surface 32 has a certain scattering distribution called BSDF (Bi-directional Scattering Distribution Function). BSDF*$\pi$ is the reflectance and gives the amount of scattered illumination which is reflected in the surface 32. The surface 32 and its marks 22 have different BSDF.
- The lens system 31 dampens the power proportionally to the inverse of the f-number (f#) squared.
- The image sensor 14 has a sensor responsivity function that describes the intensity level in LSB (Least Significant Bit; the smallest pixel intensity unit, such as "00000001" for an 8-bit grayscale image) as a function of energy density.

The above can be expressed in the following equation:

$$\left( LED\ Irradiance + External\ Illumination \right) \cdot BSDF \cdot \pi \frac{1}{f_\#^2 + 1} t_{\exp} = Energy\ density \left[ Ws / m^2 \right]$$

Since the sensor responsivity function is described as a function of energy density, the optical system responsivity function differs from the sensor responsivity function only with a factor that varies depending on:

- Different IR LED's provide different illumination. In addition, the LED is expected to decrease its output power with 50% during its lifetime.
- Different inclination angles for the sensor device 10 give different irradiance.
- Different product surfaces 32, e.g. different paper qualities, have different BSDF.
- External illumination may increase the energy density on the image sensor 14.

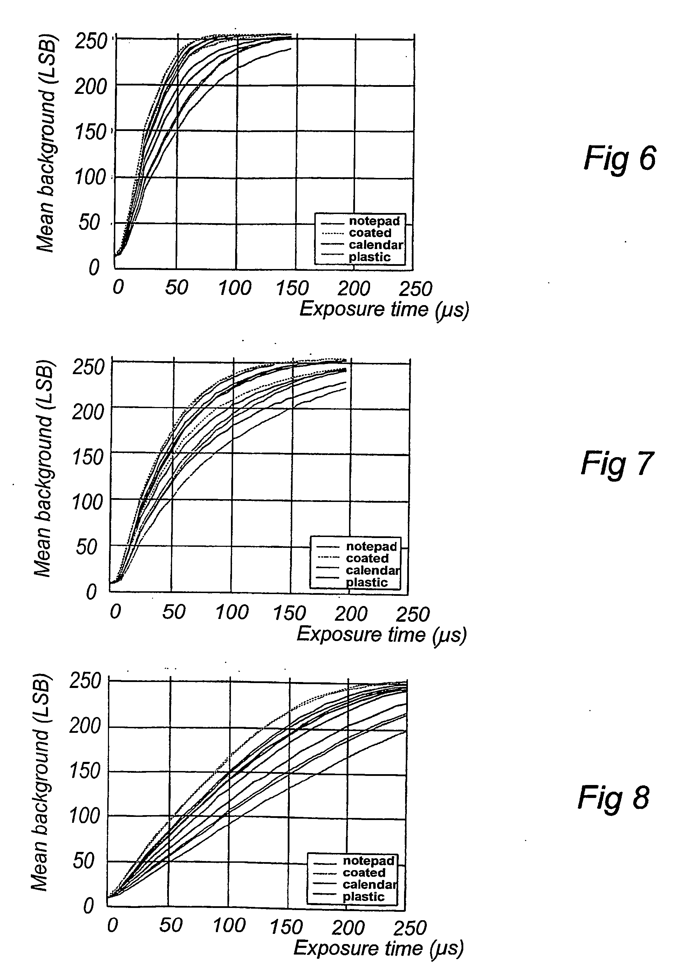

The above has been verified experimentally by measuring the mean image background luminance, in LSB, versus exposure time for three different individual IR LED's of the same type, with different inclination angles and different surface materials. FIGs 6-8 illustrate the results. It is apparent how the three LED's have different irradiance. It also appears that the sensor responsivity is not perfectly linear and that its behavior is nonlinear close to saturation.

II. EXPOSURE TIME CONTROL LOOP

In order to provide optimum image quality for successful interpretation of the captured images, with particular respect to successful image segmentation, optimum image contrast is desired between the marks 22 (i.e., the image objects) and the background.

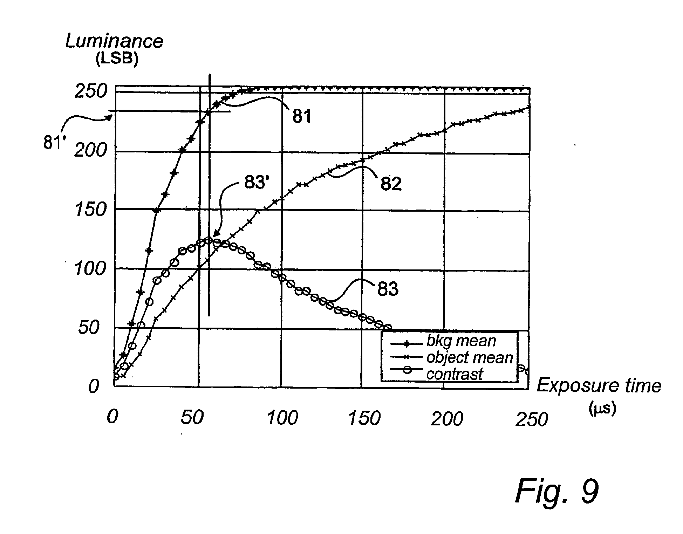

FIG 9 illustrates an optical system responsivity function not only for the background (graph 81) but also for the marks (graph 82), as measured for a specific surface material, a specific dye for the marks, a specific IR LED and a specific inclination angle. The contrast is indicated by a graph 83. For a linear function, maximum contrast would always occur at the saturation point for the background luminance. After this point the contrast will start to decrease. However, since non-linearity is added due to saturation, optimum contrast 83' is in fact found a little bit below the saturation point for the mean background luminance; see 81'. The diagram will be similar for other environments, except that the slopes of the graphs will be different.

An important conclusion from the above is that optimum contrast and, therefore, a good image quality can be obtained despite a varying environment by controlling the exposure time of the IR LED, so that the image background luminance is held constant slightly below saturation.

The overall procedural steps for obtaining the above through a general control loop 40 for the exposure time of the IR LED 13 is shown in FIG 4. A particular image #n is captured by the image sensor 14 under a certain exposure time u(n-1) in a first step 41. In a second step 42, a mean background luminance is calculated for image #n. Then, a new exposure time u(n) is calculated in a third step 43. The new exposure time will be used when capturing the next image #(n+1). Following termination of step 43, the execution will return to step 41.

The general control loop 40 represents a first order system; the new exposure time is always calculated before the next image is captured. If the mean background luminance at time n is y(n) and if a linear approximation is done around the set point, the resulting model function will be:

$$y(n) = k \cdot u(n-1) + L ,$$

where k and L are parameters. Now, the control loop can be expressed as an ordinary PI loop:

$$u(n) = k_1\big(w(n) - y(n)\big) + k_2 \sum_{m=0}^{n} \big(w(m) - y(m)\big),$$

where $w(n)$ is the desired mean background luminance. By defining

$$\Delta u(n) = u(n) - u(n-1),$$

the summation may be eliminated by rewriting the control loop as

$$\Delta u(n) = k_1\big(\Delta w(n) - \Delta y(n)\big) + k_2\big(w(n) - y(n)\big).$$

This results in

$$\Delta y(n) = k\Delta u(n-1) = kk_1\big(\Delta w(n-1) - \Delta y(n-1)\big) + kk_2\big(w(n-1) - y(n-1)\big),$$

which can be rewritten and transformed to a closed loop transfer function

$$G_c(z) = \frac{(kk_1 + kk_2)z^{-1} - kk_1 z^{-2}}{1 + (kk_1 + kk_2 - 1)z^{-1} - kk_1 z^{-2}}.$$

The poles of the closed loop transfer function are

$$z = \frac{1 - kk_1 - kk_2}{2} \pm \sqrt{\frac{(1 - kk_1 - kk_2)^2}{4} + kk_1}.$$

As is well known per se, a basic criterion for stability is that all poles lie inside the unit circle. However, since $k$ is always positive (cf. FIGs 6-8), a positive $k_1$ will always give a negative real pole. This gives an oscillatory system with long decay, and therefore $k_1$ is set to $k_1 <= 0$. Now, the poles are investigated for different values of $k_1$ and $k_2$. If $k_1 = 0$, one pole will be equal to 0 and the other one will lie on the positive real axis. This will provide no oscillations. If $k_1$ is set to a negative value, a lower rise time but a more oscillatory step response is achieved due to complex poles. The overall speed is increased by increasing $k_2$.

Generally, the control system should be as fast as possible, but not at the expense of too much oscillations. Oscillations would increase the risk for a saturated image and failure in the position decoding. Simulations have shown that $k*k_2 = 0.8$ or $0.9$ and $k*k_1 = 0$ or $-0.1$ might be suitable, but other values are of course possible.

A control loop equation will now be determined. Defining the error as $e(n) = w(n) - y(n)$ gives:

$$\Delta u(n) = u(n) - u(n-1) = k_1 \Delta e(n) + k_2 e(n)$$

$$\Leftrightarrow$$

$$u(n) = u(n-1) + k_1\big(e(n) - e(n-1)\big) + k_2 e(n)$$

The integration is implicit in the equation itself, which is advantageous, since integration windup problems are not of concern. In other words, if the output signal from the equation would become saturated at time $n$, the saturated value can simply be used, and at *n+1* the equation can be used again, as if nothing had happened and without considering the past.

Another consideration is the pole placement, which is dependent on the value of *k*, which in turn will vary greatly depending on the operation condition of the sensor device, for example due to changes in inclination angle, surface property, external illumination and specific IR LED sample. If $k_1$ and $k_2$ are to be chosen as constants, they must be chosen according to the highest value of *k* in order to be sure that undesired oscillations will not occur at any time under any circumstances. At first glance, this would mean that in most cases, the control loop would be too slow to react on fast changes in the environment.

However, it is observed that *y(n) = k·u(n-1)+L*, but *y(n) = w* = constant in steady-state. Thus, if the model function is reasonably accurate, at least around the set value *w*, the value of *k* can be calculated instead of setting it to a constant:

$$k \cdot u(n-1) = w - L \Leftrightarrow k = \frac{w-L}{u(n-1)} .$$

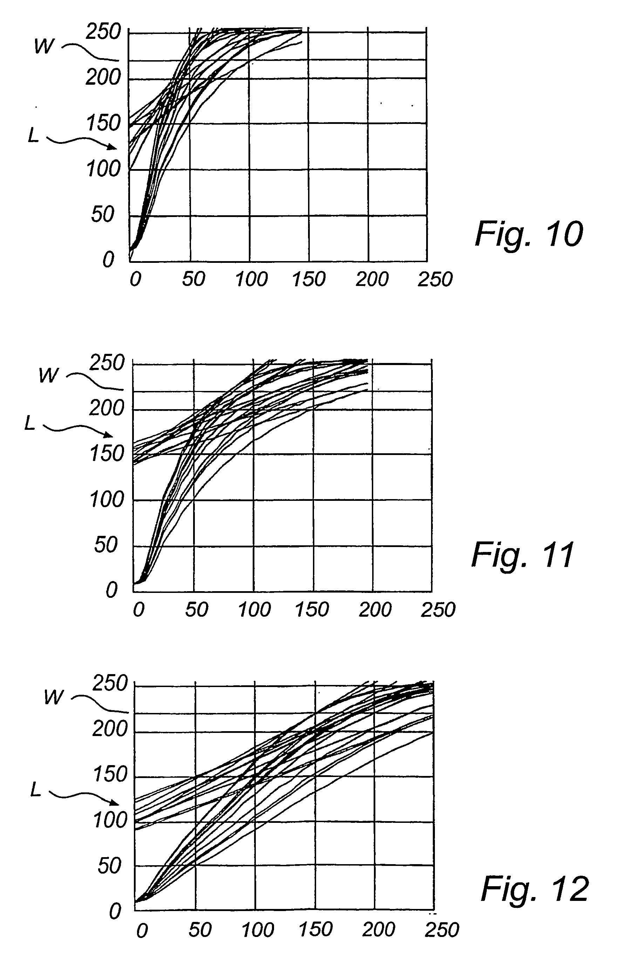

In deriving this equation, it is assumed that *L* is constant when linear approximation is done around the set value *w.* The validity of such an assumption is verified in FIGs 10-12, which illustrate linear approximations around the set value *w* = 220 for the three set of graphs from FIGs 6-8. As seen in FIGs 10-12, *L* is the intersection of the linear approximations with the y-axis. A reasonable value for *L* is about 100-150, say 125, when the set value *w* is 220.

With the above in mind the control system may be modified to have approximately constant poles by substituting *k*:

$$kk_1 = l_1 \Leftrightarrow k_1(n) = \frac{l_1}{w-L} u(n-1)$$

and

$$kk_2 = l_2 \Leftrightarrow k_2(n) = \frac{l_2}{w-L} u(n-1).$$

This yields the final version of the exposure time control loop:

$$\begin{cases} u(n) = u(n-1) + k_1(n)\big(e(n) - e(n-1)\big) + k_2(n)e(n) \\ e(n) = w - y(n) \\ k_1(n) = \frac{l_1}{w-L} u(n-1) \\ k_2(n) = \frac{l_2}{w-L} u(n-1) \end{cases}$$

where $l_1$ and $l_2$ are chosen in accordance with the above discussions on stability and response time, *w* is the desired background luminance and *L* is the intersection with the y-axis when performing linear approximation around the set value on the optical system responsivity function.

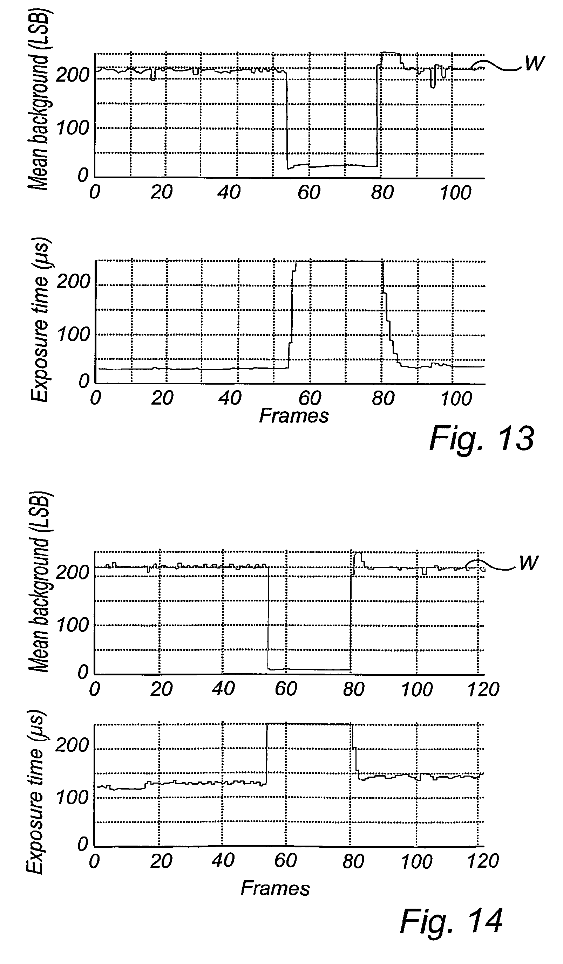

Determining the exact values of the control loop parameters $l_1$, $l_2$, *w* and *L* is merely a matter of tuning, which is well within reach of a skilled person. For instance, tests have proven that with $l_1$ = -0.1, $l_2$ = 0.8, *w* = 220 and *L* = 125, the control loop will be capable of maintaining approximately constant mean background luminance for sensor devices comprising the three different IR LED samples having the optical system responsivity functions shown in FIGs 6-8, even if the environment changes drastically due to rapid tilting of the sensor device, rapid switches between different surface materials, etc. This is further illustrated in FIGs 13-14 which show the dynamic behavior of the control system for sensor devices having the optical system responsivity functions of FIGs 6 and 8, respectively. The dynamic behavior was recorded under a test sequence in which which the sensor device: 1) was used for writing a signature on a coated (glossy) paper, 2) was subjected to rapid changes in tilt angle during 40 frames (i.e. images), 3) was aimed into the air while pushing the pen tip to activate the image sensor, and 4) was used for writing a signature on a uncoated paper. As seen from the top graphs, the control system exhibits a very fast response with only very small oscillations. During writing, every frame is thus adequately controlled so as to be useful in decoding. Further, it takes the system only about five frames to catch up after saturation in exposure time, as caused by the removal on the surface. Evidently, this fast and stable control system is achieved for both sensor devices, despite their differing responsivity functions.

As regards the set value $w$ for the desired mean background luminance, values of about 80-90% of the maximum background luminance (i.e., between about 205 and about 230 when the maximum background luminance is 255) have proven useful for $w$. However, values in a wider range of about 50 % to about 95 % of the maximum background luminance are also possible for $w$.

As illustrated above, the control loop is designed to work with essentially constant poles. Generally speaking, the control loop is then based on a model function which represents a physical relation between the actual value $y(n)$, in this case the mean background luminance, and the preceding exposure time $u(n-1)$, and which is intermittently adjusted to a current operation condition of the sensor device, so that the control loop operates with essentially constant poles, independent of operation condition of the sensor device. Such adjustment may be achieved if the model function includes at least one model working point which is essentially common to all digital images in the sequence of images, i.e. for all operating conditions. In the above example, the model function is a linear first order function of exposure time, and the common model working point is given by $(u, y)_{Common} = (0, L)$.

A new exposure time can thus be calculated by parameterizing the model function on the basis of the preceding exposure time and the common model working point. The term parameterizing as used herein refers to a step of calculating such parameters ($k$ in the above example) of the model function that are relevant to the poles of the corresponding closed loop transfer function. The parameters of the model function can be calculated intermittently, for example during each iteration of the control loop, whereupon corresponding control parameters of the control loop can be adaptively adjusted to achieve essentially constant poles.

It should perhaps be pointed out that the common model working point does not need to constitute an actual operating point for the working control loop. The model working point can thus lie outside the control region of the control loop and only be used as a secondary condition for calculating the model function parameters.

Referring now to FIG 5, a detailed implementation of the IR LED exposure time control loop 50 is as follows. In a first step 52, a start-up value $u(0)$ for the IR LED exposure time is read by the LED controller 30 from the LED control parameter storage 34. The start-up value $u(0)$ has been previously saved by the LED controller 30 at the end of the last use of the sensor device 10. Alternatively, the start-up value $u(0)$ may be assigned a constant default value which is not updated between different use periods of the sensor device 10.

The set value $w$ for the desired mean background luminance is read in step 54. Correspondingly, the remaining LED control loop parameters $I_1$, $I_2$ and '$L$ are read in step 56. A counter $n$ is reset to 1 in step 58.

The main control loop starts in step 60. Here, the LED controller 30 sets the exposure time of the IR LED 13 to $u(n-1)$ through the LED driver 33. An image #n is captured by the image sensor 14 in step 62 and is stored in the image storage 35.

The mean background luminance $y(n)$ in image #n is obtained in step 64. To this end, various methods known per se may be utilized. Advantageously, however, the LED controller 30 uses the mean background luminance value calculated by the image statistics module 36 (see above).

The error $e(n)$ is calculated in step 66. In step 68, a check for temporary abnormal image may be made by comparing $e(n)$ to a predefined threshold value. If the check is in the affirmative, another check is made in step 74 whether $e(n)$ has been continuously high for a number of preceding images. If so, image #n is not a temporary abnormal image after all, and the execution returns to the main loop. On the other hand, if the check in step 74 was negative, i.e. $e(n)$ has <u>not</u> been high for a number of preceding images, image #n is in fact a temporary abnormal image which should be disregarded from. In that case, the exposure time is kept unchanged by assigning u(n) to u(n-1) in step 76.

If the check in step 68 was negative, the normal execution continuous to step 70, where $k_1(n)$ and $k_2(n)$ are calculated as described above. Correspondingly, $u(n)$ is calculated in the next step 72. Finally, $n$ is incremented in step 78, and the execution returns to step 60, where the exposure time for the IR LED 13 is updated in preparation of the next image to be captured.

## B. Alternative embodiments

In an alternative embodiment extra care is given to the fact that the image quality of the objects (e.g. marks 22) themselves in the image is not always perfect. A less than perfect print quality will give less than perfect object contrast. Thus, not only the mean background luminance but also the mean object luminance is considered in the control loop. Preferably, the impact of the two on the total exposure time control is weighted, so that the difference between the mean background luminance and its set value will have stronger influence (e.g. a weight 0.8) than the corresponding difference between the mean object luminance and its set value (e.g. a weight 0.2).

In another embodiment, rather than performing the exposure time control by controlling a time period during which the IR LED 13 is caused to emit light, i.e. is kept turned on by the LED driver 33, the control output of the controller 30 is operatively coupled to the image sensor 14, as is indicated by a broken line in FIG 3. Thus, in this embodiment the exposure time of the sensor device 10 is controlled in the form of the time period during which the image sensor 14 is kept active and responsive to incident light during the capture of an individual image. This time period is sometimes referred to as integration time for a CCD or CMOS image sensor and may be regarded as an electronic shutter. The time period may be set by writing a control value in an internal register of the image sensor. Thus, in this embodiment the exposure time is controlled from the controller 30 by updating the register value during each iteration of the control loop (more specifically, in step 60 of FIG 5) to command the new exposure time.

In yet another embodiment the lens system 31 comprises an optical member such as an optomechanical shutter, which is positioned in an optical path between the IR LED 13 and the image sensor 14. In this case the control output of the controller 30 is operatively coupled to the optical member in the lens system 31, as is indicated by a broken line in FIG 3, wherein the exposure time of the sensor device 10 is controlled in the form of a time period during which the optical member admits light emitted from the IR LED 13 to reach the image sensor 14 during the capture of an individual image.

In still another embodiment, instead of setting $y(n)$ equal to the set value $w$ in the parameterization of the model function $y(n) = k \cdot u(n-1)+L$, so as to provide constant poles independent of operation condition as described above, the mean background luminance $y(n)$ of the current image could be used. This approach could provide a faster control system. Parameterization based on the set value $w$, on the other hand, could provide for greater flexibility in selection of model function with adequate stability of the control system.

The invention has mainly been described above with reference to a preferred embodiment. However, other embodiments than the one disclosed above are equally possible within the scope of the invention, as defined by the appended patent claims.

For instance, the above-described PI regulator may also involve derivative control (D) in addition to proportional (P) and integrating (I) control, thereby in effect constituting a PID regulator. Moreover, linear control systems of higher order than 1, as well as nonlinear control systems in general, may be used for the exposure time control.

Further, the model function need not be a linear function, but can be any suitable function approximating the relation between the actual value and the exposure time, at least around the set value. Examples of such functions include: polynomial functions of suitable degree, exponential functions of suitable base, logarithmic functions of suitable base, cyclometric functions, trigonometric functions, and combinations thereof. If the model function includes more than two unknown parameters, it may however be necessary to identify further secondary conditions in order to be able to adjust or parameterize the model function in the control loop.

**Claims**

1. A method for exposure time control in an optical sensor device (10) of the type having an illuminating light source (13) and an image sensor (14) for capturing a sequence of images under exposure of light from said light source, said method comprising repeatedly capturing images, and, for each next image to be captured, controlling quality of the next image, said controlling comprising forming an exposure time control loop, wherein each iteration of the control loop involves:

   capturing a current image under exposure of light from said light source during an exposure time (u[n-1]) calculated during the preceding iteration;
   determining an actual luminance condition value (y[n]) in said current image, said determining comprising calculating a mean background luminance (y[n]) in said current image by:

   determining a maximum luminance value, or a percentile value in the range of about 80-95 of the luminance values, in each of a plurality of subsets of said current image; and
   calculating a mean background luminance (y[n]) as a mean of said maximum luminance values or percentile values of said subsets;

   calculating an error (e[n]) between a set value (w) and said actual luminance condition value (y[n]); and
   calculating a current exposure time (u[n]) as a function of the preceding exposure time (u[n-1]) and said error (e[n]).

2.  The method according to claim 1, wherein said current exposure time (u[n]) is calculated so as to yield optimum contrast (83') between the background and at least one object (22) in a subsequent image which is captured in the following iteration of the control loop.

3.  The method according to claim 2, wherein said sequence of images contains a position-coding pattern (20) and wherein said position-coding pattern includes said at least one object (22).

4.  The method according to claim 1, wherein said current exposure time (u[n]) is determined so as to yield, in a subsequent image which is captured in the following iteration of the control loop, a mean background luminance (81') which is below saturation and approximately matches said set value (w).

5.  The method according to claim 4, wherein said set value (w) for mean background luminance is between about 50% and about 95%, and preferably between about 80% and about 90%, of a saturation level of said image sensor (14).

6.  The method according to any one of the preceding claims, wherein said set value (w) is constant over time.

7.  The method according to any one of the preceding claims, wherein the control loop operates with essentially constant poles, independent of operation condition of said optical sensor device (10).

8.  The method according to any one of claims 1-6, wherein said control loop is based on a model function relating said actual luminance condition value (y[n]) to said preceding exposure time (u[n-1]), wherein said method further comprises: intermittently adjusting said model function to a current operation condition of said optical sensor device (10), so that the control loop operates with essentially constant poles, independent of operation condition of said optical sensor device (10).

9.  The method according to any one of claims 1-6, wherein said control loop is based on a model function relating said actual luminance condition value (y[n]) to said preceding exposure time (u[n-1]), said model function including at least one model function working point which is essentially common to all operation conditions of said optical sensor device (10), and wherein calculating said current exposure time (u[n]) comprises parameterizing said model function based on said preceding exposure time (u[n-1]) and said model function working point, so that the control loop operates with essentially constant poles, independent of operation condition of said optical sensor device.

10. The method according to claim 9, wherein said model function includes at least one parameter (L) which is essentially invariant of operation condition of said optical sensor device (10), said parameter (L) defining said model function working point, and wherein said the parameterization of said model function is based on said preceding exposure time (u[n-1]) and said at least one essentially invariant parameter (L).

11. The method according to claim 8, 9 or 10, wherein said model function is defined around said set value (w).

12. The method according to claim 9, 10 or 11, wherein parameterizing said model function includes setting said actual luminance condition value (y[n]) equal to said set value (w).

13. The method according to claim 9, 10 or 11, wherein the parameterization of said model function is further based on said actual luminance condition value (y[n]) calculated for said current image.

14. A method according to any one of the preceding claims, wherein said exposure time control loop is given by:

$$\begin{cases} u(n) = u(n-1) + k_1(n)(e(n) - e(n-1)) + k_2(n)e(n) \\ e(n) = w - y(n) \\ k_1(n) = \dfrac{l_1}{w-L}u(n-1) \\ k_2(n) = \dfrac{l_2}{w-L}u(n-1) \end{cases}$$

where $l_1$, $l_2$ and $L$ are constants.

**15.** The method according to any one of the preceding claims, wherein determining said actual luminance condition value (y[n]) comprises calculating a mean background luminance as well as a mean object luminance in said current image.

**16.** The method according to claim 15, wherein determining said actual luminance condition value (y[n]) involves combining said mean background luminance and said mean object luminance such that said mean background luminance has stronger influence than the mean object luminance when calculating said current exposure time (u[n]).

**17.** The method according to any one of the preceding claims, wherein said exposure time is defined as a time period during which said light source (13) is caused to emit light.

**18.** The method according to any one of claims 1-16, wherein said exposure time is defined as a time period during which said image sensor (14) is caused to capture one of said images.

**19.** The method according to any one of claims 1-16, wherein said exposure time is defined as a time period during which light emitted from said light source (13) is admitted to reach said image sensor (14).

**20.** A computer program product directly loadable into a memory of a processor, the computer program product comprising program code for performing the steps of any of claims 1-19 when executed by said processor.

**21.** An integrated circuit adapted to perform the steps of any of claims 1-19.

**22.** A hand-held image-producing apparatus (10) comprising either the computer program product of claim 20 or the integrated circuit of claim 21.

**23.** An optical sensor device comprising an illuminating light source (13) and an image sensor (14), wherein the image sensor is adapted to capture a sequence of images under exposure of light from said light source, said optical sensor device further comprising:

a controller (30) having a control output and being adapted to generate an exposure time control signal on said control output, said controller comprising an exposure time control loop in order to control quality of each next image to be captured, wherein each iteration of the control loop involves: calculating an error (e[n]) between a set value (w) and an actual luminance condition value (y[n]) determined in a current image in said sequence of images, wherein determining said actual luminance condition comprises calculating a mean background luminance (y[n]) in said current image by:

determining a maximum luminance value, or a percentile value in the range of about 80-95 of the luminance values, in each of a plurality of subsets of said current image, and calculating a mean background luminance (y[n]) as a mean of said maximum luminance values or percentile values of said subsets; calculating a current exposure time (u[n]) as a function of said error (e[n]) and an exposure time (u[n-1]) calculated during the preceding iteration of the control loop; and generating said exposure time control signal on said control output based on said current exposure time (u[n]).

**Patentansprüche**

1. Verfahren zur Belichtungszeitsteuerung in einer optischen Sensoreinrichtung (10) des Typs mit einer beleuchtenden Lichtquelle (13) und einem Bildsensor (14) zur Erfassung einer Sequenz von Bildern unter Lichtbelichtung aus der Lichtquelle, wobei das Verfahren ein wiederholtes Erfassen von Bildern und für jedes nächste zu erfassende Bild die Steuerung der Qualität des nächsten Bildes umfasst, wobei das Steuern das Bilden einer Belichtungszeit-Regelschleife umfasst, wobei bei jeder Iteration der Regelschleife Folgendes auftritt:

   Erfassen eines aktuellen Bildes unter Lichtbelichtung aus der Lichtquelle während einer Belichtungszeit (u[n-1]), die während der vorausgehenden Iteration berechnet wird;
   Bestimmen eines tatsächlichen Luminanzbedingungswerts (y[n]) in dem aktuellen Bild, wobei das Bestimmen das Berechnen einer mittleren Hintergrundluminanz (y[n]) in dem aktuellen Bild folgendermaßen umfasst:

   Bestimmen eines maximalen Luminanzwerts oder eines Percentilwerts in dem Bereich von etwa 80-95 der Luminanzwerte in jeder von mehreren Teilmengen des aktuellen Bildes; und
   Berechnen einer mittleren Hintergrundluminanz (y[n]) als einen Mittelwert der maximalen Luminanzwerte oder Percentilwerte der Teilmengen;

   Berechnen eines Fehlers (e[n]) zwischen einem Sollwert (w) und dem tatsächlichen Luminanzbedingungswert (y[n]); und
   Berechnen einer aktuellen Belichtungszeit (u[n]) als Funktion der vorhergehenden Belichtungszeit (u[n-1]) und des Fehlers (e[n]).

2. Verfahren nach Anspruch 1, wobei die aktuelle Belichtungszeit (u[n]) so berechnet wird, dass optimaler Kontrast (83') zwischen dem Hintergrund und mindestens einem Objekt (22) in einem nachfolgenden Bild, das in der folgenden Iteration der Regelschleife erfasst wird, erhalten wird.

3. Verfahren nach Anspruch 2, wobei die Sequenz von Bildern ein Positionskodierungsmuster (20) enthält und wobei das Positionskodierungsmuster das mindestens eine Objekt (22) enthält.

4. Verfahren nach Anspruch 1, wobei die aktuelle Belichtungszeit (u[n]) so bestimmt wird, dass in einem nachfolgenden Bild, das in der folgenden Iteration der Regelschleife erfasst wird, eine mittlere Hintergrundluminanz (81') erhalten wird, die unter der Sättigung liegt und ungefähr mit dem Sollwert (w) übereinstimmt.

5. Verfahren nach Anspruch 4, wobei der Sollwert (w) für die mittlere Hintergrundluminanz zwischen etwa 50% und etwa 95% und vorzugsweise zwischen etwa 80% und etwa 90% eines Sättigungspegels des Bildsensors (14) liegt.

6. Verfahren nach einem der vorhergehenden Ansprüche, wobei der Sollwert (w) zeitlich konstant ist.

7. Verfahren nach einem der vorhergehenden Ansprüche, wobei die Regelschleife mit im Wesentlichen konstanten Polen unabhängig von den Betriebsbedingungen der optischen Sensoreinrichtung (10) wirkt.

8. Verfahren nach einem der Ansprüche 1-6, wobei die Regelschleife auf einer Modellfunktion basiert, die den tatsächlichen Luminanzbedingungswert (y[n]) mit der vorhergehenden Belichtungszeit (u[n-1]) in Beziehung setzt, wobei das Verfahren ferner Folgendes umfasst: die Modellfunktion wird in Abständen auf einen aktuellen Betriebszustand der optischen Sensoreinrichtung (10) so justiert, dass die Regelschleife mit im Wesentlichen konstanten Polen unabhängig von den Betriebsbedingungen der optischen Sensoreinrichtung (10) wirkt.

9. Verfahren nach einem der Ansprüche 1-6, wobei die Regelschleife auf einer Modellfunktion basiert, die den tatsächlichen Luminanzbedingungswert (y[n]) mit der vorhergehenden Belichtungszeit (u[n-1]) in Beziehung setzt, wobei die Modellfunktion mindestens einen Modellfunktions-Arbeitspunkt enthält, der im Wesentlichen allen Betriebsbedingungen der optischen Sensoreinrichtung (10) gemeinsam ist, und wobei das Berechnen der aktuellen Belichtungszeit (u[n]) umfasst, die Modellfunktion auf der Basis der vorhergehenden Belichtungszeit (u[n-1]) und des Modellfunktions-Arbeitspunkts so zu parametrisieren, dass die Regelschleife mit im Wesentlichen konstanten Polen unabhängig von dem Betriebszustand der optischen Sensoreinrichtung wirkt.

10. Verfahren nach Anspruch 9, wobei die Modellfunktion mindestens einen Parameter (L) enthält, der im Wesentlichen bezüglich Betriebsbedingungen der optischen Sensoreinrichtung (10) invariant ist, wobei der Parameter (L) den Modellfunktions-Arbeitspunkt definiert und wobei die Parametrisierung der Modellfunktion auf der vorhergehenden Belichtungszeit (u[n-1]) und dem mindestens einen im Wesentlichen invarianten Parameter (L) basiert.

11. Verfahren nach Anspruch 8, 9 oder 10, wobei die Modellfunktion um den Sollwert (w) herum definiert wird.

12. Verfahren nach Anspruch 9, 10 oder 11, wobei das Parametrisieren der Modellfunktion das Einstellen des tatsächlichen Luminanzbedingungswerts (y[n]) gleich dem Sollwert (w) umfasst.

13. Verfahren nach Anspruch 9, 10 oder 11, wobei die Parametrisierung der Modellfunktion ferner auf dem tatsächlichen Luminanzbedingungswert (y[n]) basiert, der für das aktuelle Bild berechnet wird.

14. Verfahren nach einem der vorhergehenden Ansprüche, wobei die Belichtungszeit-Regelschleife gegeben wird durch:

$$\begin{cases} u(n) = u(n-1) + k_1(n)\big(e(n) - e(n-1)\big) + k_2(n)e(n) \\ e(n) = w - y(n) \\ k_1(n) = \dfrac{l_1}{w-L} u(n-1) \\ k_2(n) = \dfrac{l_2}{w-L} u(n-1) \end{cases}$$

wobei $l_1$, $l_2$ und $L$ Konstanten sind.

15. Verfahren nach einem der vorhergehenden Ansprüche, wobei das Bestimmen des tatsächlichen Luminanzbedingungswerts (y[n]) umfasst, eine mittlere Hintergrundluminanz sowie eine mittlere Objektluminanz in dem aktuellen Bild zu berechnen.

16. Verfahren nach Anspruch 15, wobei das Bestimmen des tatsächlichen Luminanzbedingungswerts (y[n]) umfasst, die mittlere Hintergrundluminanz und die mittlere Objektluminanz so zu kombinieren, dass die mittlere Hintergrundluminanz beim Berechnen der aktuellen Belichtungszeit (u[n]) einen stärkeren Einfluss als die mittlere Objektluminanz hat.

17. Verfahren nach einem der vorhergehenden Ansprüche, wobei die Belichtungszeit als ein Zeitraum definiert ist, während dem bewirkt wird, dass die Lichtquelle (13) Licht emittiert.

18. Verfahren nach einem der Ansprüche 1-16, wobei die Belichtungszeit als ein Zeitraum definiert ist, während dem bewirkt wird, dass der Bildsensor (14) eines der Bilder erfasst.

19. Verfahren nach einem der Ansprüche 1-16, wobei die Belichtungszeit als ein Zeitraum definiert ist, während dem erlaubt wird, dass aus der Lichtquelle (13) emittiertes Licht den Bildsensor (14) erreicht.

20. Direkt in einen Speicher eines Prozessors ladbares Computerprogrammprodukt, wobei das Computerprogrammprodukt Programmcode zum Ausführen der Schritte nach einem der Ansprüche 1-19 bei Ausführung durch den Prozessor umfasst.

21. Integrierte Schaltung, die dafür ausgelegt ist, die Schritte nach einem der Ansprüche 1-19 auszuführen.

22. In der Hand gehaltene Bilderzeugungsvorrichtung (10), die entweder das Computerprogrammprodukt nach Anspruch 20 oder die integrierte Schaltung nach Anspruch 21 umfasst.

23. Optische Sensoreinrichtung mit einer beleuchtenden Lichtquelle (13) und einem Bildsensor (14), wobei der Bildsensor dafür ausgelegt ist, unter Lichtbelichtung aus der Lichtquelle eine Sequenz von Bildern zu erfassen, wobei die optische Sensoreinrichtung ferner Folgendes umfasst:

eine Steuerung (30) mit einem Steuerausgang, die dafür ausgelegt ist, an dem Steuerausgang ein Belichtungszeit-Steuersignal zu erzeugen, wobei die Steuerung eine Belichtungszeit-Regelschleife umfasst, um die Qualität jedes nächsten zu erfassenden Bildes zu steuern, wobei bei jeder Iteration der Regelschleife Folgendes auftritt:

Berechnen eines Fehlers (e[n]) zwischen einem Sollwert (w) und einem tatsächlichen Luminanzbedingungswert (y[n]), der in einem aktuellen Bild in der Sequenz von Bildern bestimmt wird, wobei das Bestimmen der tatsächlichen Luminanzbedingungen das Berechnen einer mittleren Hintergrundluminanz (y[n]) in dem aktuellen Bild Folgendermaßen umfasst: Bestimmen eines maximalen Luminanzwerts oder eines Percentilwerts in dem Bereich von etwa 80-95 der Luminanzwerte in jeder von mehreren Teilmengen des aktuellen Bildes und

Berechnen einer mittleren Hintergrundluminanz (y[n]) als einen Mittelwert der maximalen Luminanzwerte oder Percentilwerte der Teilmengen; Berechnen einer aktuellen Belichtungszeit ((u[n]) als Funktion des Fehlers (e[n]) und einer während der vorhergehenden Iteration der Regelschleife berechneten Belichtungszeit (u[n-1]); und Erzeugen des Belichtungszeit-Steuersignals an dem Steuerausgang auf der Basis der aktuellen Belichtungszeit (u[n]).

## Revendications

1. Procédé destiné à la commande du temps d'exposition dans un dispositif à capteur optique (10) du type comportant une source lumineuse (13) et un capteur d'images (14) permettant de acquérir une séquence d'images sous l'exposition de la lumière provenant de ladite source lumineuse, ledit procédé comprenant la capture répétée d'images et, pour chaque image suivante devant être acquise, la commande de la qualité de l'image suivante, ladite commande comprenant la formation d'une boucle de commande de temps d'exposition, dans laquelle chaque itération d'une boucle de commande met en jeu :

la capture de l'image actuelle sous exposition de la lumière provenant de ladite source lumineuse pendant un temps d'exposition (u[n-1]) calculé pendant l'itération précédente,
la détermination d'une valeur de l'état de luminance réelle (y[n]) dans ladite image actuelle, ladite détermination comprenant le calcul d'une luminance moyenne d'arrière plan (y[n]) dans ladite image actuelle grâce à :

la détermination d'une valeur de luminance maximale, ou d'une valeur percentile, dans la plage comprise d'environ 80 à 95, des valeurs de luminances dans chacun d'une pluralité de sous-ensembles de ladite image actuelle, et
le calcul d'une luminance moyenne d'arrière plan (y[n]) en tant que moyenne desdites valeurs de luminance maximale ou des valeurs percentiles
desdits sous-ensembles,

le calcul d'une erreur (e[n]) entre une valeur établie (w) et ladite valeur de l'état de luminance réelle (y[n]), et
le calcul d'un temps d'exposition actuel (u[n]) en tant que fonction du temps d'exposition précédent (u[n-1]) et de ladite erreur (e[n]).

2. Procédé selon la revendication 1, dans lequel ledit temps d'exposition actuel (u[n]) est calculé de façon à produire un contraste optimal (83') entre l'arrière plan et au moins un objet (22) dans une image suivante qui est acquise lors de l'itération suivante de la boucle de commande.

3. Procédé selon la revendication 2, dans lequel ladite séquence d'images contient un motif de codage de position (20) et dans lequel ledit motif de codage de position inclut ledit ou lesdits objets (22).

4. Procédé selon la revendication 1, dans lequel ledit temps d'exposition actuel (u[n]) est déterminé de façon à produire, dans une image suivante qui est acquise dans l'itération qui suit de la boucle de commande, une luminance moyenne d'arrière plan (81') qui se trouve en dessous de la saturation et qui correspond approximativement à ladite valeur établie (w).

5. Procédé selon la revendication 4, dans lequel ladite valeur établie (w) pour la luminance moyenne d'arrière plan se trouve entre environ 50 % et environ 95 %, et de préférence entre environ 80 % et environ 90 % d'un niveau de saturation dudit capteur d'images (14).

6. Procédé selon l'une quelconque des revendications précédentes, dans lequel ladite valeur établie (w) est une constante par rapport au temps.

**7.** Procédé selon l'une quelconque des revendications précédentes, dans lequel la boucle de commande fonctionne grâce à des pôles essentiellement constants, indépendants de l'état de fonctionnement dudit dispositif de capteur optique (10).

**8.** Procédé selon l'une quelconque des revendications 1 à 6, dans lequel ladite boucle de commande est fondée sur une fonction modèle rapportant ladite valeur de l'état de luminance réelle (y[n]) au dit temps d'exposition précédent (u[n-1]), dans lequel ledit procédé comprend en outre : l'ajustement intermittent de ladite fonction modèle à un état de fonctionnement actuel dudit dispositif de capteur optique (10) de telle sorte que la boucle de commande fonctionne avec des pôles essentiellement constants, indépendants de l'état de fonctionnement dudit dispositif de capteur optique (10).

**9.** Procédé selon l'une quelconque des revendications 1 à 6, dans lequel ladite boucle de commande est fondée sur une fonction modèle rapportant ladite valeur de l'état de luminance réelle (y[n]) au dit temps d'exposition précédent (u[n-1]), ladite fonction modèle incluant au moins un point de fonctionnement de la fonction modèle qui est essentiellement commun à tous les états de fonctionnement dudit dispositif de capteur optique (10), et dans lequel le calcul dudit temps d'exposition actuel (u[n]) comprend le paramétrage de ladite fonction modèle sur la base dudit temps d'exposition précédent (u[n-1]) et dudit point de fonctionnement de la fonction modèle de telle sorte que la boucle de commande fonctionne avec des pôles essentiellement constants, indépendants de l'état de fonctionnement dudit dispositif de capteur optique.

**10.** Procédé selon la revendication 9, dans lequel ladite fonction modèle inclut au moins un paramètre (L) qui est essentiellement invariant par rapport à l'état de fonctionnement dudit dispositif de capteur optique (10), ledit paramètre (L) définissant ledit point de fonctionnement de la fonction modèle, et dans lequel ledit paramétrage de ladite fonction modèle est basée sur ledit temps d'exposition précédent (u[n-1]) et sur ledit ou lesdits paramètres (L) essentiellement invariants.

**11.** Procédé selon la revendication 8, 9 ou 10, dans lequel ladite fonction modèle est définie autour de ladite valeur établie (w).

**12.** Procédé selon la revendication 9, 10 ou 11, dans lequel le paramétrage de ladite fonction modèle inclut l'établissement de ladite valeur de l'état de luminance réelle (y[n]) comme étant égale à ladite valeur établie (w).

**13.** Procédé selon la revendication 9, 10 ou 11, dans lequel le paramétrage de ladite fonction modèle est en outre basée sur ladite valeur de l'état de luminance réelle (y[n]) calculée pour ladite image actuelle.

**14.** Procédé selon l'une quelconque des revendications précédentes, dans lequel la boucle de commande de temps d'exposition est donnée par :

$$\begin{cases} u(n) = u(n-1) + k_1(n)(e(n) - e(n-1)) + k_2(n)e(n) \\ e(n) = w - y(n) \\ k_1(n) = \dfrac{l_1}{w - L} u(n-1) \\ k_2(n) = \dfrac{l_2}{w - L} u(n-1) \end{cases}$$

où $l_1$, $l_2$ et $L$ sont des constantes.

**15.** Procédé selon l'une quelconque des revendications précédentes, dans lequel la détermination de ladite valeur de l'état de luminance réelle (y[n]) comprend le calcul d'une luminance moyenne d'arrière plan de même que d'une luminance moyenne d'objets dans ladite image actuelle.

**16.** Procédé selon la revendication 15, dans lequel la détermination de ladite valeur de l'état de luminance réelle (y[n]) met en jeu la combinaison de ladite luminance moyenne d'arrière plan et de ladite luminance moyenne d'objets de telle sorte que ladite luminance moyenne d'arrière plan présente une influence plus importante que la luminance moyenne d'objets lors du calcul dudit temps d'exposition actuel (u[n]).

17. Procédé selon l'une quelconque des revendications précédentes, dans lequel ledit temps d'exposition est défini comme un intervalle de temps pendant lequel ladite source lumineuse (13) est amené à émettre de la lumière.

18. Procédé selon l'une quelconque des revendications 1 à 16, dans lequel ledit temps d'exposition est défini comme un intervalle de temps pendant lequel ledit capteur d'images (14) est amené à acquérir l'une desdites images.

19. Procédé selon l'une quelconque des revendications 1 à 16, dans lequel ledit temps d'exposition est défini comme un intervalle de temps pendant lequel la lumière émise depuis ladite source lumineuse (13) peut atteindre ledit capteur d'images (14).

20. Programme informatique directement chargeable dans la mémoire d'un processeur, le programme informatique comprenant un code de programme permettant d'exécuter les étapes de l'une quelconque des revendications 1 à 19 lorsqu'il est exécuté par ledit processeur.

21. Circuit intégré conçu pour exécuter les étapes de l'une quelconque des revendications 1 à 19.

22. Appareil portatif de production d'images (10) comprenant soit le programme informatique selon la revendication 20, soit le circuit intégré selon la revendication 21.

23. Dispositif de capteur optique comprenant une source lumineuse (13) et un capteur d'images (14), dans lequel le capteur d'images est conçu pour acquérir une séquence d'images sous l'exposition de la lumière provenant de ladite source lumineuse, ledit dispositif de capteur optique comprenant en outre :

   un contrôleur (30) possédant une sortie de commande et
   étant conçu pour générer un signal de commande de temps d'exposition sur ladite sortie de commande, ledit contrôleur comprenant une boucle de commande de temps d'exposition permettant de commander la qualité de chaque image suivante à acquérir, dans lequel chaque itération de la boucle de commande met en jeu : le calcul d'une erreur (e[n]) entre une valeur établie (w) et une valeur de l'état de luminance réelle (y[n]) déterminée dans une image actuelle dans ladite séquence d'images, dans lequel la détermination dudit état de luminance réelle comprend le calcul d'une luminance moyenne d'arrière plan (y[n]) dans ladite image actuelle grâce à : la détermination d'une valeur maximale de luminance ou d'une valeur percentile dans la plage d'environ 80 à 95 des valeurs de luminance dans chacun d'une pluralité de sous-ensembles de ladite image actuelle, ainsi que le calcul d'une luminance moyenne d'arrière plan (y[n]) en tant que moyenne desdites valeurs de luminance maximale ou desdites valeurs percentiles desdits sous-ensembles, le calcul d'un temps d'exposition actuel (u[n]) en tant que fonction de ladite erreur (e[n]) et d'un temps d'exposition (u[n-1]), calculé pendant l'itération précédente de la boucle de commande, tout comme la génération dudit signal de commande de temps d'exposition sur ladite sortie de commande sur la base dudit temps d'exposition actuel (u[n]).

*Fig. 1*

*Fig. 2*

**34**
LED ctrl para-meters

**30**
LED controller

**33**
LED driver

13

**14**
Image sensor

**31**
Lens system

**35**
Image storage

**36**
Image statistics

**37**
Image seg-mentation

**38**
Image analyzer & decoder

32
Recording surface

*Fig. 3*

40
**General LED control:**

41
Capture image #n with LED exposure time u(n-1)

42
Calculate mean background luminance for image # n

43
Calculate LED exposure time u(n) for next image #(n+1)

*Fig. 4*

50

**Detailed LED control:**

52

Read start-up value u(0) for LED exposure time

54

Read set value w for desired mean bg luminance

56

Read LED control loop parameters

58

n := 1

60

Set LED exposure time to u(n-1)

62

Capture image #n

64

Calculate mean bg luminance y(n) for image #n

66

Calculate error e(n) := w - y(n)

68

e(n) > threshold for abnormal image?

Yes

No

74

Has e(n) exceeded threshold for x last images?

Yes

No

76

u(n) := u(n-1)

70

Calculate k₁(n) & k₂(n)

72

Calculate u(n) := ƒ[u(n-1),k1(n),k2(n),e(n),e(n-1)]

78

n := n+1

*Fig 5*

Fig 6

Fig 7

Fig 8

Fig. 9

*Fig. 10*

*Fig. 11*

*Fig. 12*

Fig. 13

Fig. 14

**EP 1 436 768 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0116691 A
- US 5764611 A
- WO 9705560 A
- US 5223935 A
- EP 0602637 A
- US 5831254 A
- WO 0126032 A
- WO 0126033 A
- SE 0201244 W